# EUROPEAN PATENT APPLICATION

(11) **EP 0 899 843 A2**
(43) Date of publication of application: **03.03.1999**
(21) Application number: 98306817.2
(22) Date of filing: 26.08.1998
(51) Int. Cl.: H02G 3/08

(54) **Panel provided with at least one entry, and a junction box provided with such a panel**

(30) Priority: 26.08.1997 BE 9700699
(71) Applicant: GE power Controls Belgium N.V., 9000 Gent (BE)
(72) Inventor: Celis, Etienne, 9320 Aalst (BE)
(74) Representative: Goode, Ian Roy

(57) **Abstract**

Panel provided with an entry for electrical conductors, whereby said entry comprises a seal (4, 23) which at least partly closes off an opening (2, 21) in the panel (1, 15), characterized in that the opening (2, 21) is surrounded by a tubular part (3, 22), and in that the seal (4, 23) comprises an elastomeric membrane (5, 24) which at least partly closes off the tubular part (3, 22)and an elastomeric lining (6, 25) on the inner side of the tubular part (3, 22).

A junction box equipped with a base (12) with a bottom wall (14) and a standing wall (15) on the perimeter thereof, and a cover (13), whereby the standing wall (15) is provided with at least one opening (21) which is at least partially closed off by such panel.

## Description

The invention concerns a panel provided with at least one entry for electrical conductors, whereby said entry comprises a seal which at least partly closes off an opening in the panel. Such panels are for instance parts of casings for electrical material, such as a part of a switch box, a metering box or a junction box. In such known panels, the opening consists of a tube stub or a tubular part which is provided with an internal screw thread, and the seal is a break-out panel covering the tube stub.

Such entries cooperate with a cap nut which can be screwed into the tube stub, thus breaking the break-out panel free, and through which a cable can be inserted. A seal ring surrounding the cable may be compressed by a second nut screwed inside the cap nut to provide for a watertight entry.

A junction box provided with such entries is disclosed in EP-A-0.546.637 and EP-A-0.621.671. Combining such an entry with a cooperating cap nut is complicated and expensive, whereas inserting a cable and making it watertight is time-consuming. In other known panels, the entry is designed for direct insertion of a cable or a tube for electrical wires, without a cap nut. These panels have no tube stubs. The seal is more flexible than the panel so as to provide for an adequate sealing. Moreover, the seal is made of the same material, and part of the seal has to be cut away before a cable or a tube for electrical wire can be inserted.

Panels are also known wherein the seal is at least partly made of a more flexible material than the panel, for example of an elastomeric material such as disclosed in FR-A-2.402.323 and EP-A-0.653.825.

According to FR-A-2.402.323, the seal has an elastic protruding part with a detachable central element. The protruding part is pushed away by means of a cable or a tube, and the central element is detached, after which the cable or the tube can traverse this part, which assures a sealing. According to EP-A-0.653.825, the seal comprises a flat, resilient disc, fit tightly in the opening of the panel. The disc's thickness radially reduces towards a central hole. A disposable, rigid bung closes off the hole. After the bung has been pushed away, a cable can traverse the disc, which assures the sealing. These entries permit a quick insertion of a cable or tubing and a good sealing, but they do not permit the use of nuts or other insertion elements with screw thread.

The invention aims to provide a panel with at least one cable entry which is more universally applicable and through which a cable can be inserted either directly or through the intermediary of a cap nut.

According to the invention, there is provided a panel provided with an entry for electrical conductors, whereby said entry comprises a seal which at least partly closes off an opening in the panel, characterized in that the opening is surrounded by a tubular part, and in that the seal comprises an elastomeric membrane which at least partly closes off the tubular part and an elastomeric lining or coating on the inner side of the tubular part.

Preferably, the lining is a collar standing on the membrane and forming one piece with the membrane. Also, the membrane preferably closes off the tubular part completely, for example at one end.

The lining may adhere to the inner surface of the tubular part and the thickness of the membrane may decrease towards the centre.

The thickness of the lining may vary in the axial direction and may be larger near the membrane. The lining and the membrane may be elastomeric and the panel may be made of a thermoplastic material.

The invention also concerns a junction box equipped with a panel with at least one entry as described above.

The invention further concerns a junction box equipped with a base with a bottom wall and a standing wall on the perimeter thereof, and a cover, whereby the standing wall is provided with at least one opening which is at least partially closed off by a seal comprising an elastomeric membrane, characterized in that the standing wall is a panel according to either one of the above mentioned forms of embodiment,. whereby the opening is surrounded by a tubular part, while the seal comprises, apart from the membrane, a lining on the inner side of this tubular part.

Preferably the perimeter of the cover is provided with at least one ear for inserting a tip of a screwdriver, whereby the ear forms a hole on the top side of the cover without laterally protruding on the outside of the cover.

The junction box may be provided with at least one opening in the bottom wall closed off by a membrane of elastomeric material. The standing wall may be a double wall which consists of an inner wall part, an outer wall part and a connecting part between the upper edges of the two wall parts, whereby several tubular parts surrounding openings covered by a seal extend between both wall parts.

The invention will now be described in greater detail, by way of example, with reference to the drawings, in which:-
Figure 1 is a longitudinal cross-sectional view illustrating a panel provided with an entry according to the invention, showing different electrical or insertion elements which can be inserted in the entry;
Figure 2 is a front view of a junction box with a panel provided with entries according to the invention and with the cover in open position;
Figure 3 is a plan view of the cover of the junction box of Figure 2;
Figure 4 is a plan view of the base of the junction box of Figure 2;
Figure 5 represents a cross-section according to line V-V in Figure 3;
Figure 6 represents a cross-section according to line VI-VI in Figure 4;
Figure 7 represents a cross-section according to line VII-VII in Figure 6, but to a larger scale and with reference to another embodiment according to the invention;
Figure 8 represents a section similar to that in Figure 7, but with reference to yet another embodiment according to the invention.

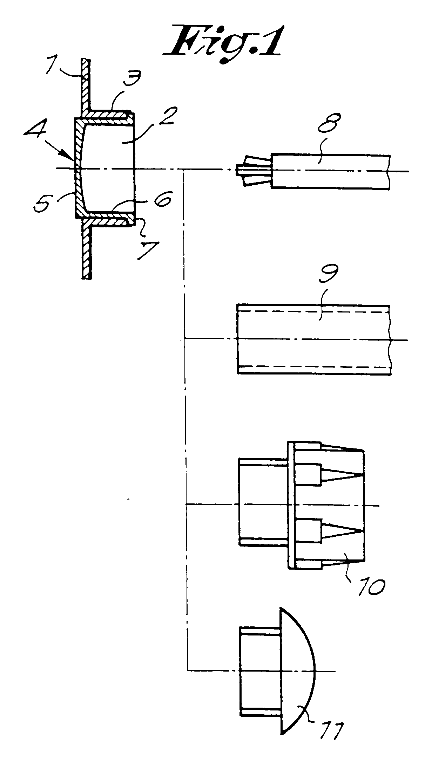

Figure 1 illustrates a panel 1 provided with an opening 2 surrounded by a tubular part 3 and sealed with an elastomeric seal 4 consisting of a membrane 5 closing off the opening 2 at one end, and of a lining 6 covering the inner side of the tubular part 3 completely. The membrane 5 and the lining 6 are made in one piece. the lining 6 forming a collar standing on the disc-like membrane 5.

The panel 1 is made of thermoplastic material, preferably synthetic material such as for example polypropylene, styrene-butadiene or ABS or other thermoplastics. The membrane 5 and the lining 6 are made in one piece from thermoplastic elastomer such as PP-EPDM. SBS, SEBS or PU.

The length of the tubular part 3 is about the length of a tube stub in junction boxes which are designed to receive a cable nut or gland or the like to be screwed in. and it is for example about 8 to 11 mm. The lining 6 extends over the complete length of the tubular part 3, whereas the membrane 5 may be situated at one end of the opening 2. In this case, the membrane 5 can adhere to the panel 1 with parts situated outside the opening 2.

In the example shown, the collar forming the lining 6 stands on the perimeter of the membrane 5, and this membrane is fixed to the panel by means of the lining 6, which is fixed to the tubular part 3. The lining 6 is fixed to the tubular part by means of physicochemical adhesion, as the elastomeric material of the lining 6 has been sprayed in liquid form, for instance by a means of multi-compound injection moulding technique, on the more rigid synthetic material of the tubular part 3. The adhesion depends on the selection of the rigid and elastomeric materials. It can be combined with or replaced by mechanical fixation, for instance with complementary ribs and grooves. The end of the lining 6 situated away from the membrane 5 is provided with an outwardly projecting flange 7 situated against the end of the tubular part 3.

The thickness of the lining 6 is preferably situated between 0.8 and 1.2 mm, and is for example about 1 mm. At its perimeter, the thickness of the membrane 5 is about the same as the thickness of the lining 6, but it decreases towards the centre. where this thickness is about halved in order to facilitate the penetration of a cable 8.

A tube 9 for electrical wiring can penetrate in a similar way through the membrane 5, provided the outer diameter of this tube 9 is small enough to fit into the opening 2, possibly by compressing the lining 6. In both cases, whether it is a cable 8 or a tube 9, the membrane 5 assures a watertight sealing.

The inner diameter of the lining 6 is a bit smaller than the outer diameter of the thread on the threaded end of a cable gland or nut 10 with possibly a built-in pulling strain relief. This implies that, thanks to the softness of the elastomeric material of the lining 6, it is possible to screw or even to push the threaded end of said cap nut 10 in the lining 6. The screw thread enters the lining 6 through elastic deformation and guarantees a watertight sealing. The lining 6 is not threaded.

Once the membrane 5 has been penetrated, the entry can still be hermatically sealed again by a sealing element 11 with a threaded end having the same diameter and possibly a smaller length than the threaded end of the cap nut 10.

It should be noted that the lining 6 of the above-described panel does not need to cover the inside of the tubular part 3 completely. It may only partially cover the inside of the tubular part 3.

The above-described panel with entries permits a quick traverse of a cable 9 or a tube 9 in combination with the use of threaded elements 10 and 11, whereby an excellent sealing is obtained in all cases. Such a panel 1 with one or more entries as described above can be part of any casing for electrical appliances such as the housing of a switch box or the housing of a metering box. It can also be sold as an individual part to be mounted in an opening in a box.

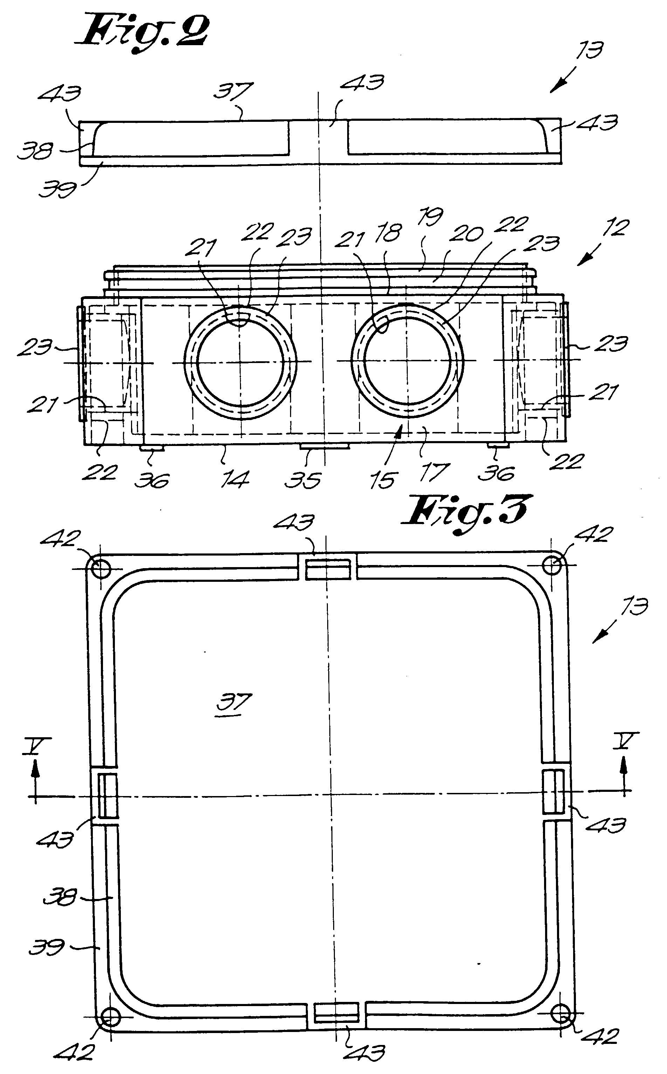

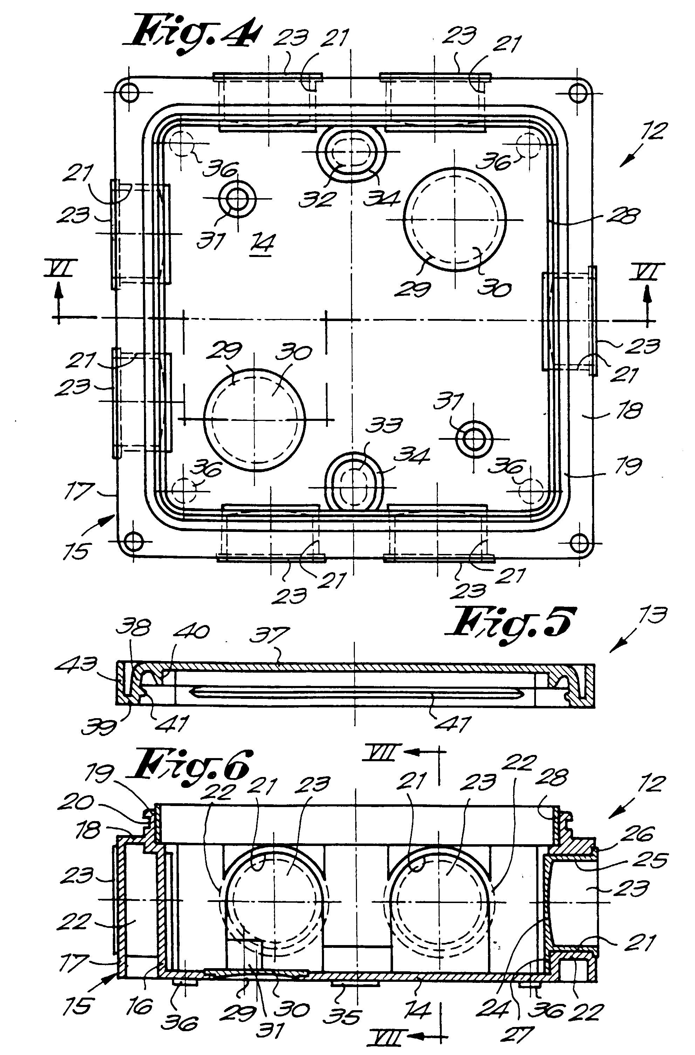

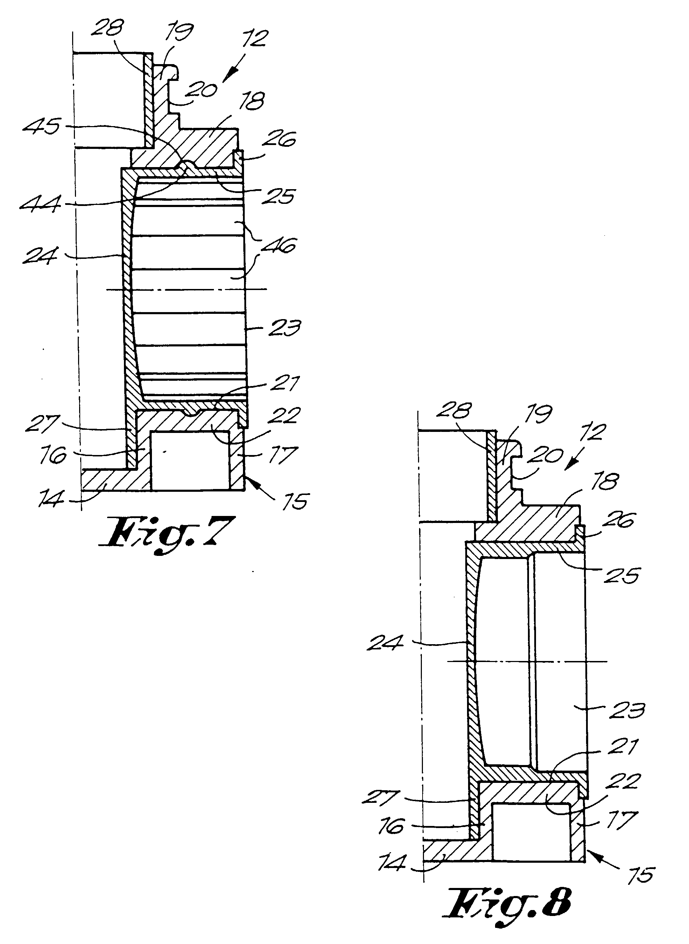

According to another particular advantageous application of the invention, the panel 1 with entries covered by a seal 4 as described above is part of a junction box as shown in Figures 2 to 6.

This junction box comprises a base 12 and a cover 13. The base 12 consists of a quadrangular bottom wall 14 and a standing wall 15 forming four sides. In the example shown, the standing wall 15 is mainly a double wall and consists of an inner wall part 16 connected to the bottom wall 14, an outer wall part 17 extending at a distance around the inner wall part 16, a connecting part 18 between the upper edges of the two wall parts 16 and 17, and a standing rim 19 projecting upward from the connecting part 18 and shifted towards the outside in relation to the inner surface of the inner wall part 16.

The rim 19 is provided with a groove 20 on the outside and in the four sides of the base 12. The standing wall 15 is provided with a number of cylindrical openings 21 surrounded by or restricted by tubular parts 22 extending between the inner and outer wall parts 16 and 17. Three sides of the base 12 contain two such openings 21, one adjacent to the other, whereas the fourth side only has a single opening 21.

In a similar way as described with reference to Figure 1, each opening 21 is covered with a seal 23 of thermoplastic elastomeric material similar to the above-mentioned seal 4 and consisting of a membrane 24 closing off the inner end of the cylindrical opening 21 and a lining 25 covering the wall of the opening 21 completely. i.e., the inner surface of the tubular part 22, whereby said lining 25 ends in an outwardly projecting flange 26 which is partly countersunk in the end of the tubular part 22. The seal 23 may be provided with a lip 27 extending on the inner surface of the inner wall part 16, up the bottom wall 14, forming a downward extension of the membrane 2 4. The rim 19 is covered on the inside, over its entire perimeter, with a ring 28 of the same thermoplastic elastomeric material as the seal 23 which extends above the rim 19. The ring 28 may be connected to all the seals 23, for example by means of lips similar to the lips 27. These connecting lips and also the lips 27 can be situated partly or entirely in a recession in the inner wall part 16.

The bottom wall 14 is also provided with two openings 29 . However, these openings 29 are not surrounded by tubular parts, but they are closed off by a disc-like membrane 30 of the same thermoplastic elastomeric material as the membranes 24. The membrane 30 adheres with its edge to the material of the bottom wall 14 around the opening 29 which has a part with a slightly greater diameter near the inner surface of this wall 14.

Apart from said openings 29, which have about the same diameter as the openings 21 and which are diagonally opposed to one another, the bottom wall 14 has two small circular rims 31 for fastening connectors by screws and two oblong openings 32 and 33 for screws for fixing the box. The oblong openings 32 and 33 are at right angles in relation to one another. The openings 32 and 33 are surrounded by a rim 34 on the inside and by a smaller rim 35 on the outside of the base 12. The openings 32 and 33 are sealed with the same elastomeric material as the openings 21. The bottom wall 14 has a small supporting foot 36 on its outer side and in each comer.

The base 12 can be manufactured in two steps by means of a multi-compound injection moulding technique. First, all parts which are not made of elastomeric material but of relatively rigid plastic material are injected. As soon as they are cured, the remaining parts of thermoplastic elastomeric material are injected. After a sufficient setting time, the base 12 is removed from the mould.

It is important to know that, although cable nuts or other threaded elements can be connected to the base 12, this base 12 does not contain any threads, which implies that it is easier to be manufactured.

The cover 13 is made of a relatively rigid plastic by means of injection moulding, and it consists of a flat, central part 37, an outer, downward extending rim 38 on the edge of the central part 37 which ends in an outwardly directed flange 39, and an inner, downward extending smaller rim 40 at a short distance from the rim 38.

The outer perimeter of the flange 39 corresponds to the outer perimeter of the standing wall is of the base 12. The rims 38 and 40 are designed such that the rim 19 and the ring 28 of the base 12 fit in between when the cover 13 is placed on the base 12 and the flange 39 abuts against the connection part 18 of the standing wall 15. Subsequently, the elastomeric ring 28 is compressed between the rims 38 and 40, thus assuring a watertight sealing. The outer rim 38 is provided with ribs 41 on its inner side, except in the four corners.

When the cover 13 closes off the base 12, said ribs 41 snap in the groove 20 over the entire perimeter, except in the corners of the groove 20 in the rim 19 retaining the cover 13 on the base 12. If necessary, the cover 13 can be fixed extra tightly to the base 12 by means of screws. To this end, the flange 39 is provided with openings 42 in its four corners for screws to be screwed in the connection part 18. In order to be able to remove the cover 13 easily from the base, this cover 13 has at least one and preferably, as is shown in the drawings, four ears 43 on its perimeter, one on each side, in which the tip of a screwdriver can be inserted. These ears 43 form holes opening on the top side of the cover 13, and they do not laterally protrude on the outside of the flange 39.

In a similar way as described with reference to Figure 1, a cable 8, a tube 9 or a cable gland or nut 10 can be inserted in each opening 21 of the base 12. The cable 8 and possibly the tube 9 perforate the membrane 24. The seal 23 provides a perfect sealing. Also a sealing element 11 can be inserted in an opening 21.

A cable 8 or a tube 9 can be provided in an opening 29 in the bottom wall 14 through the membrane 30, whereby the membrane 30 seals the opening 29 around the cable 8 or the tube 9. The seal 23, and more particularly the lining 25, must not necessarily have the shape as represented in Figures 1 to 6. It may have many different shapes. The lining 25 does not necessarily have to completely cover the wall of the opening 21, i.e., the inner surface of the tubular part 22. It may only partially cover the wall of the opening 21.

In the embodiment shown in Figure 7, the lining 25 is provided with a rib 44 on its outside, along its perimeter, which rib 44 fits into a corresponding groove 45 in the tubular part 3. Moreover, the inside of the lining 25 is provided with axially extending ribs 46. These ribs may facilitate the screwing in the threaded end of the cable gland or nut 10 or the element 11. It is also possible to provide only a single rib 44 or merely ribs 46.

In the embodiment shown in Figure 8, the lining 25 is thicker near the membrane 24. This difference in thickness may be the result of a difference in the inner diameter of the tubular part 22, whereby the inner diameter of the lining 25 is invariable, or it may be the result of a smaller inner diameter of the lining near the membrane 24 as shown in Figure 8.

This difference in thickness may reduce or increase the resistance when screwing a cap 10 in the seal 23. Neither the base 12, nor the cover 13 must necessarily be quadrangular. They may also be circular.

The standing walls 15 must not be double. It may comprise only the inner wall part 16. In this case the tubular parts 22 around the openings 21 may be situated on the outside. on the inside or on both sides of the inner wall 16.

## Claims

1. A panel provided with an entry for receiving a threaded cable nut or gland (10, 11), or an electrical conductor (8, 9), whereby said entry comprises a seal (4, 23) which at least partly closes off an opening (2, 21) in the panel (1, 15), characterized in that the opening (2, 21 ) is surrounded by a tubular part (3, 22), and in that the seal (4, 23) comprises a membrane (5, 24) which at least partly closes off the tubular part (3, 22) and a lining (6, 25) on the inner side of the tubular part (3, 22).

2. A panel according to claim 1, characterized in that the lining (6, 25) is a collar standing on the membrane (5, 24) and forming one piece with the membrane (5, 24).

3. A panel according to claim 1 or 2, characterized in that the membrane (5, 24) closes off the tubular part (3, 22) completely.

4. A panel according to any one of the preceding claims, characterized in that the membrane (15, 24) is situated at one end of the tubular part (3, 22).

5. A panel according to any one of the preceding claims, characterized in that the end of the lining (6, 25) situated away from the membrane (5, 24) is provided with an outwardly projecting flange (7, 26).

6. Junction box equipped with a base (12) with a bottom wall ( 14) and a standing wall (15) on the perimeter thereof, and a cover (13), whereby the standing wall (15) is provided with at least one opening (21) which is at least partially closed off by a seal (4, 23) comprising an elastomeric membrane (5, 24), characterized in that the standing wall is a panel according to any one of claims 1 to 5 and the opening (2, 21) is surrounded by a tubular part (3, 22), while the seal (4, 23) comprises, apart from the membrane (5, 24), a lining (6, 25) on the inner side of this tubular part (3, 22).

7. Junction box according to claim 6, characterized in that the standing wall (15) has a rim (19) at the top which is covered on the inside with a ring (28) made of elastomeric material.

8. Junction box according to claims 6 or 7, characterized in that the standing wall (15) has a rim (19) at the top which is provided with a groove (20) on its outer side which extends at least partly over the perimeter of the base (12), whereas the cover (13) has a central part (37) and at least one outer rim (38) on its perimeter. whereby this rim (38) is provided with ribs (41) on the inside which snap in the groove (20) provided in the rim (19) as the cover (13) closes off the base (12).

9. Junction box according to any of claims 6 to 8, characterized in that the cover (13) comprises a central part (37), an outer rim (38) on its edge and an inner smaller rim (40), whereby the rims (38) and (40) are designed to enclose the rim (19) and the elastomeric ring (28) of the base (12) when the cover (13) closes off the base (12).

10. Junction box according to any of claims 6 to 9, characterized in that the cover (13) comprises an outwardly extending flange (39) connected to the outer rim (38) of the cover ( 13).
